Europäisches Patentamt

European Patent Office

Office européen des brevets

(11) Veröffentlichungsnummer: **0 429 844 A2**

## (12) EUROPÄISCHE PATENTANMELDUNG

(21) Anmeldenummer: 90120186.3

(51) Int. Cl.5: **G05B 7/02**

(22) Anmeldetag: 20.10.90

(30) Priorität: 16.11.89 DE 3938083

(43) Veröffentlichungstag der Anmeldung:
05.06.91 Patentblatt 91/23

(84) Benannte Vertragsstaaten:
AT CH DE ES FR GB IT LI NL SE Patentblatt

(71) Anmelder: Ruppert, Martin, Prof.Dr.
Am Dörrbach 2
W-6648 Wadern(DE)

(71) Anmelder: MÜLLER, POHL & PARTNER GmbH
Kohlenstrasse 13
W-6670 St. Ingbert(DE)

(72) Erfinder: Ruppert, Martin, Prof. dr.
Am Dörrbach 2
W-6648 Wadern(DE)

(74) Vertreter: Viél, Georg, Dipl.-Ing.
Am Zimmerplatz 16
W-6606 Saarbrücken-Gersweiler(DE)

(54) Filteranordnung zur Generierung von Vorgabewerten zeitlich veränderlicher, physikalischer Grössen.

(57) Die Erfindung betrifft eine Filteranordnung zur Generierung von Vorgabewerten zeitlich veränderlicher, physikalischer Größen mit stetigen zeitlichen Ableitungen. Die Filteranordnung besteht aus mindestens zwei Filtern, z.B. aus einem Positions- und einem Geschwindigkeitsfilter, die zeitlich veränderliche Vorgabewerte zur Steuerung und Regelung von z.B. Bewegungsabläufen, Temperaturverläufen, chemischen Reaktionen so aufbereiten, daß die generierten Sollwerte auf die technisch-physikalischen Anforderungen der anzusteuernden Aggregate zugeschnitten sind. Die mit der Erfindung erzielten Vorteile bestehen insbesondere darin, daß eine vorgegebene Sollbahn mit sehr großer Genauigkeit einhaltbar und gleichzeitig eine hohe Laufruhe der Aggregate sichergestellt ist.

Fig. 3

## FILTERANORDNUNG ZUR GENERIERUNG VON VORGABEWERTEN ZEITLICH VERÄNDERLICHER, PHYSIKALISCHER GRÖSSEN

Die Erfindung betrifft eine Filteranordnung zur Generierung von Vorgabewerten zeitlich veränderlicher, physikalischer Größen mit stetigen, zeitlichen Ableitungen beliebiger Ordnung für Regel- und Steueranordnungen.

Bei der Regelung und Steuerung von physikalischen Größen wie beispielsweise Weg, Geschwindigkeit, Beschleunigung, Drehzahl usw. , ist der Fachmann bestrebt, eine Soll-Ist-Differenz, d.h. Abweichungen zwischen berechneten Vorgabe- bzw. Sollwerten und Istwerten von vornherein möglichst zu vermeiden oder, da dies aus praktischen Gründen meist nicht zu realisieren ist, die Abweichung möglichst gering zu halten. Probleme gibt es immer dann, wenn im Verlauf der Sollwertvorgabe knickhafte oder sprunghafte Änderungen auftreten, die sprunghafte Änderungen in den zeitlichen Ableitungen höherer Ordnungen mit u.U. unendlich großen positiven bzw. negativen Werten zur Folge haben, und die von den angesteuerten Aggregaten nicht nachvollziehbar sind.

Unter Berücksichtigung von durch die Antriebsphysik vorgegebenen Begrenzungen hinsichtlich Geschwindigkeit, Beschleunigung bzw. Verzögerung usw. erfordert die Berechnung der Sollwerte z.B. für mehrdimensionale, geometrisch-zeitliche Bewegungen einen sehr großen Rechenaufwand und ist unter Echtzeitbedingungen meist nicht wirtschaftlich realisierbar.

Selbst die Sollwertberechnungen für einfache, eindimensionale Bewegungen benötigt bei Vorgabe von Begrenzungen für Beschleunigung und Ruck schon so hohe Echtzeitrechenleistungen, daß in der Regel bereits Ruckbegrenzungen nicht berücksichtigt werden.

Aus der EP-OS 0 313 663 ist eine Filteranordnung zur Steuerung der Verfahrgeschwindigkeit einer Roboterhand bekannt, die die berechneten Vorgabewerte für die Verfahrgeschwindigkeit durch ein- und mehrfache lineare Filterung oder auch durch exponentielle Filterung über einen vorgegebenen Arbeitsweg glättet. Diese Anordnung hat den Nachteil, daß bei "sanfter" Steuerung die Genauigkeit, mit der die Sollbahn eingehalten wird, nicht allzu hoch ist, so daß bei größeren Anforderungen an eine möglichst genaue Einhaltung der Sollbahn diese Methode mit Erfolg nicht einsetzbar ist.

In der DE-OS 34 08 551 wird ein Verfahren zum Verringern von Bahnfehlern bei rechnergesteuerten Werkzeugmaschinen oder Industrierobotern beschrieben, bei dem im Sollwertkanal ein bei Bahnvektorabweichungen wirksames Vorfilter eingeschleift ist, das im wesentlichen das inverse Übertragungsverhalten der Antriebsregelstrecke hat.

Auch die aus der DE-PS 33 46 179 und der DE-PS 34 11 651 bekannten Regelanordnungen zum Positionieren eines Antriebes bzw. zur Gleichlaufregelung mehrerer Antriebe weisen eine Vorsteuerung mit angenähert inversem Übertragungsverhalten auf.

Mit diesen Methoden lassen sich höhere Anforderungen an die Genauigkeit der Sollbahn einhalten, aber von Nachteil ist, daß durch das inverse System Beschränkungen hinsichtlich zulässiger Änderungen der höheren zeitlichen Ableitungen der Eingabewerte nicht berücksichtigt werden können und die Laufruhe der Antriebe darunter leidet.

Der Erfindung liegt die Aufgabe zugrunde, eine Filteranordnung der eingangs genannten Art so auszubilden, daß die Forderungen nach hoher Bahngenauigkeit und gleichzeitig hoher Laufruhe der Antriebe auf einfache Weise im Echtzeiteinsatz realisierbar sind.

Diese Aufgabe wird erfindungsgemäß dadurch gelöst, daß Filter vorgesehen sind, deren Charakteristik so beschaffen ist, daß zeitlich veränderliche Vorgabewerte (w) aus einem Vorgabewertspeicher zu Sollwertsignalen für Regel- und Steueranordnungen aufbereitet werden, die auf die technisch-physikalischen Anforderungen der anzusteuernden Aggregate zugeschnitten sind, wobei das eine Filter als Ausgang Sollwerte ($v_s$) liefert, die die zeitliche Ableitung erster Ordnung der generierten Sollwerte ($x_s$) des ersten Filters darstellen.

Eine Weiterbildung der Erfindung besteht darin, daß ein weiteres Filter vorgesehen ist, das als Ausgang zeitliche Ableitungen zweiter Ordnung ($a_s$) der Sollwerte ($x_s$) des ersten Filters liefert.

Im Rahmen der Erfindung ist auch vorgesehen, daß ein anderes Filter vorgesehen ist, das als Ausgang zeitliche Ableitungen dritter Ordnung ($r_s$) der Sollwerte ($x_s$) des ersten Filters liefert.

Vorteilhaft zur Vorsteuerung in mehrschleifigen Regelanordnungen oder Zustandsreglern ist, daß neben dem einen Filter weitere Filter vorgesehen sind, die sukzessiv steigend zeitliche Ableitungen beliebiger Ordnung ($v_s$, $a_s$, $r_s$, ...) der Sollwerte ($x_s$) des ersten Filters liefern.

Erfindungsgemäß ist weiter vorgesehen, daß ein Weiterschalter vorgesehen ist, der die zeitlich veränderlichen Vorgabewerte (w) und die zugeordneten, generierten Sollwerte ($x_s$) eines Filters als Eingangswerte erhält, und der den Vorgabewertspeicher so steuert, daß aus der Folge der Vorgabewerte (w) der diskrete Vorgabewert (w(k)) zeitlich so lange den Filtern zugeführt wird, bis die Abweichung (e) zwischen Vorgabewert (w(k)) und generiertem Sollwert ($x_s$) unterhalb einer zugelassenen Toleranz (f) liegt.

Zweckmäßig kann es auch sein, daß der Weiterschalter neben den zeitlich veränderlichen Vorgabewerten (w) und den zugeordneten generierten Sollwerten ($x_s$) des ersten Filters noch die generierten Sollwerte ($v_s$, $a_s$, $r_s$, ...) der anderen Filter als Eingangswerte erhält, und der den Vorgabewertspeicher so steuert, daß aus der Folge der Vorgabewerte (w) der diskrete Vorgabewert (w(k)) zeitlich so lange den Filtern zugeführt wird, bis die Abweichung zwischen dem für die Steuerung der Aggregate am besten geeigneten Sollwert und dem generierten Sollwert ($x_s$ oder $v_s$ oder $a_s$ oder $r_s$ ...) unterhalb einer zugelassenen Toleranz liegt.

Die mit der Erfindung erzielten Vorteile bestehen insbesondere darin, daß eine rein geometrisch vorgegebene Sollbahn beliebig genau eingehalten werden kann bei gleichzeitig hoher Laufruhe der Antriebe. Außerdem werden neben den generierten Positionssollwerten auch Sollwerte höherer zeitlicher Ableitungen generiert, die in vorteilhafter Weise zur Vorsteuerung in mehrschleifigen Regelanordnungen oder Zustandsreglern verwendet werden können.

Die Erfindung wird anhand der Zeichnungen näher erläutert.

Es zeigen

Fig. 1 den zeitlichen Verlauf einer Sollgröße mit zwei Knickpunkten und der zugehörigen zeitlichen Ableitungen höherer Ordnungen, schematisch,

Fig. 2 einen geglätteten Verlauf der Sollgröße aus Fig. 1 und der zugehörigen zeitlichen Ableitungen höherer Ordnungen, schematisch,

Fig. 3 ein Blockschaltbild der erfindungsgemäßen Filteranordnung mit zwei Filtern,

Fig. 4 ein Blockschaltbild entsprechend Fig. 3 mit 4 Filtern,

Fig. 5 ein Blockschaltbild entsprechend Fig. 4 mit einem dem ersten Filter zugeordneten Weiterschalter,

Fig. 6 ein Blockschaltbild entsprechend Fig. 5 mit einem Weiterschalter, der allen Filtern zugeordnet ist,

Fig. 7 ein Blockschaltbild der erfindungsgemäßen Filteranordnung mit angesteuerten mehrschleifigen Regelkreisen, und

Fig. 8 eine Darstellung der zeitlichen Signalverläufe der Filterausgänge für ein Anwendungsbeispiel.

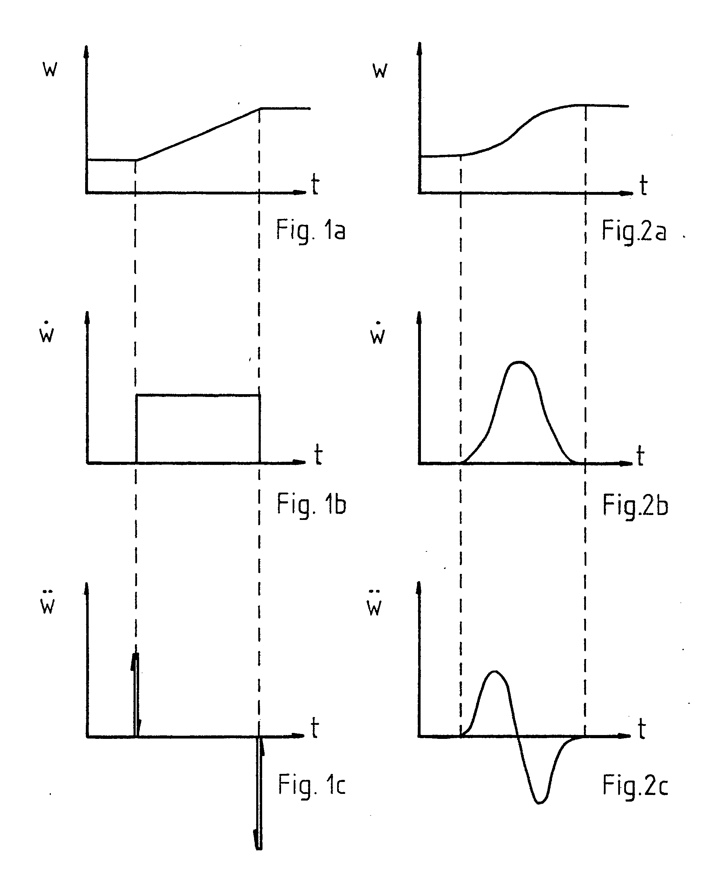

Fig. 1a zeigt als Beispiel den zeitlichen Verlauf einer mit der Zeit sich ändernden Regelgröße w, d.h. die Sollbahn der Regelgröße w, die an den Stellen $t_1$ und $t_2$ Knickstellen aufweist. Die Geschwindigkeit w (zeitliche Ableitung erster Ordnung), mit der die Sollbahn der Regelgröße w sich ändert bzw. einstellt, erfährt an diesen Knickstellen gemäß Fig. 1b einen endlichen Sprung, während die Beschleunigung bzw. Verzögerung

$$\overset{\bullet\bullet}{w}$$

(zeitliche Ableitung zweiter Ordnung der Sollbahn der Regelgröße w) dort unendlich große, positive bzw. negative Werte annimmt (Fig. 1c). Aufgrund der durch die Antriebsphysik der anzusteuernden Aggregate vorgegebenen Beschränkungen lassen sich derartige Sollbahnen nicht exakt nachfahren.

Fig. 2a bis 2c zeigen eine geglättete Sollbahn der Regelgröße w und den Verlauf ihrer zeitlichen Ableitungen. Sprunghafte Änderungen in den zeitlichen Ableitungen treten nicht mehr auf und ein entsprechend "weiches" Verfahren der angesteuerten Aggregate wird möglich. Daraus wird ersichtlich, daß höhere zeitliche Ableitungen der Vorgabewerte w nicht nur begrenzt sondern stetig vorgebbar sein müssen.

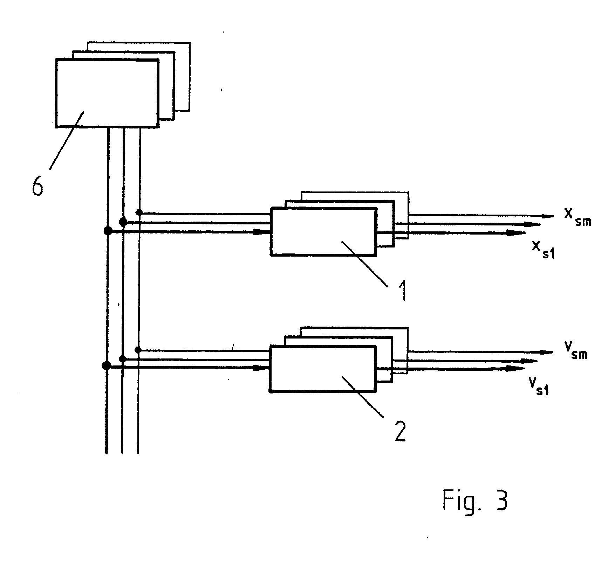

Im Blockschaltbild von Fig. 3 ist eine erfindungsgemäße Filteranordnung zur Generierung von Vorgabewerten w zeitlich veränderlicher, physikalischer Größen für die Steuerung von 1 bis m Antrieben (Achsen) dargestellt. Sie besteht im wesentlichen aus zwei Filtern 1, 2 und dem Vorgabewertspeicher 6 für die zeitlich veränderlichen Vorgabewerte w.

Die Vorgabewerte w werden den Filtern 1, 2 zugeführt und dort so aufbereitet, daß sie auf die durch die anzusteuernden Antriebe vorgegebenen technisch-physikalischen Anforderungen zugeschnitten sind, d.h. daß bei einer vorgegebenen maximalen Änderung des Vorgabewerts w pro Eingabeschritt in die Filter 1, 2 die gegebenen physikalischen Begrenzungen für die Ausgangssollwerte $x_s$ und $v_s$ der Filter 1, 2 eingehalten werden.

Wird die erfindungsgemäße Filteranordnung zur Steuerung von Bewegungsabläufen verwendet, dann stellt das eine Filter 1 ein Positionsfilter und das andere Filter 2 ein Geschwindigkeitsfilter dar; das Positionsfilter 1 liefert als Ausgangswert $x_s$ den gefilterten Vorgabewert von w und das Geschwindigkeitsfilter 2 die zeitliche Ableitung erster Ordnung $v_s$ des Sollwertes $x_s$ des ersten Filters 1. Beide Sollwerte $x_s$, $v_s$ werden Positions- und Geschwindigkeitsreglern einer Steueranordnung für Antriebe zugeführt.

Die erfindungsgemäße Filteranordnung ist nicht nur auf Generierung von Sollwerten für die Steuerung von Bewegungsabläufen mit den zeitlich veränderlichen, physikalischen Größen Weg, Geschwindigkeit, Beschleunigung, Verzögerung, Drehzahl usw. beschränkt, sondern mit ihr lassen sich auch Vorgabewerte zur Steuerung von Temperaturverläufen und chemischen Reaktionen und ähnlichen Prozessen generieren.

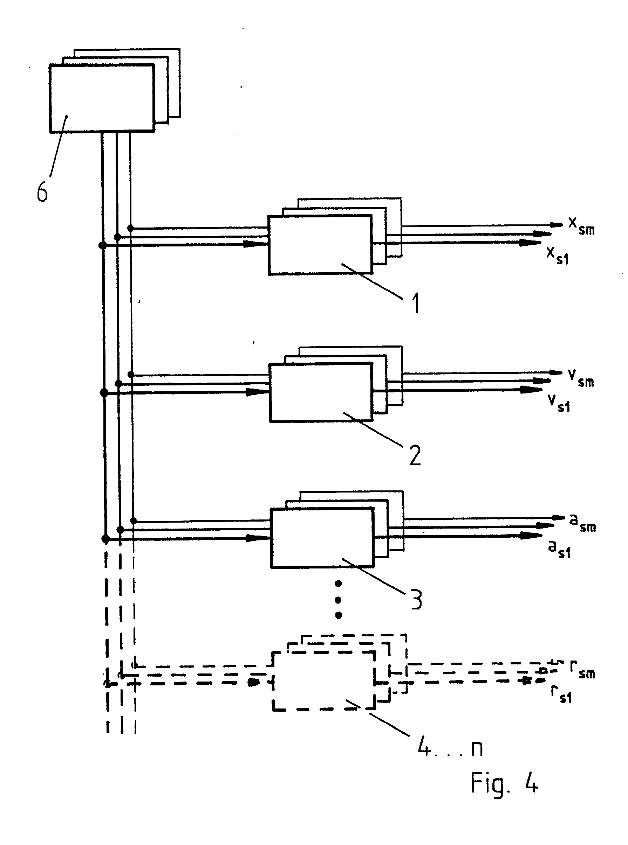

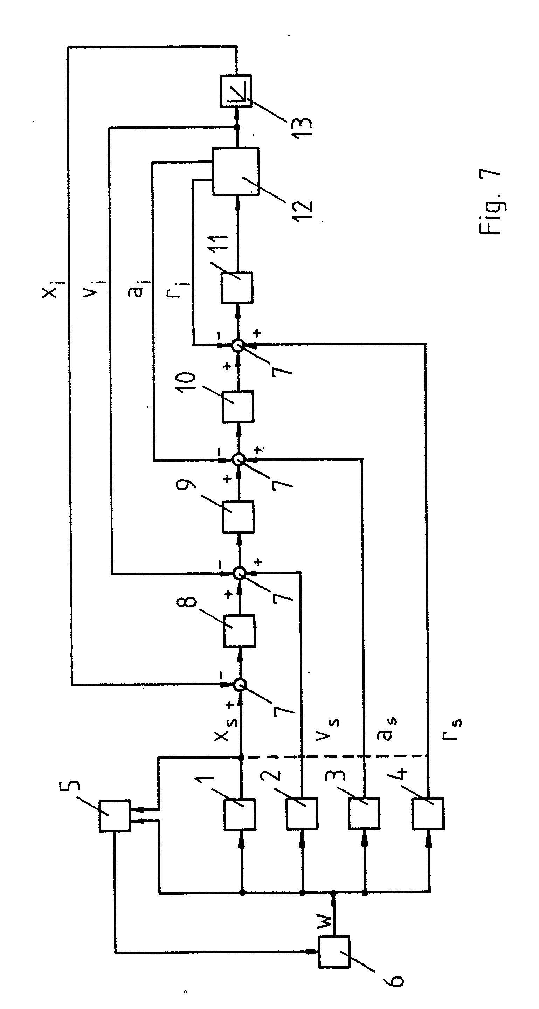

Die im Blockschaltbild von Fig. 4 dargestellte Weiterbildung der Erfindung zeigt eine Filteranordnung, die neben den aus Fig. 3 bekannten Filtern 1, 2 weitere Filter 3, 4 ... aufweist. Dadurch wird erreicht, daß neben den Positions- und Geschwindigkeitssollwerten $x_s$ und $v_s$ noch entsprechende Sollwerte beliebig höherer zeitlicher Ableitungen $a_s$, $r_s$, . . . des Eingangswertes w sukzessiv erzeugt werden, die in vorteilhafter Weise zur Vorsteuerung in mehrfachen Regel- und Steueranordnungen, wie beispielsweise in Fig. 7 dargestellt und später beschrieben, verwendet werden können.

Eine mögliche Auslegung der Filter 1, 2, 3, 4 ... ist dadurch gegeben, daß für die Sollwerte $x_s$, $v_s$, $a_s$, $r_s$, ... beim k-ten Schritt gilt:

$$X_s(k) = \sum_{i=0}^{n} g_x(i) \cdot W(k-i)$$

$$V_s(k) = \sum_{i=0}^{n} g_v(i) \cdot W(k-i)$$

$$a_s(k) = \sum_{i=0}^{n} g_a(i) \cdot W(k-i)$$

wobei $x_s(k)$ der k-te Ausgangssollwert des Positionsfilters 1,
$v_s(k)$ der k-te Ausgangssollwert des Geschwindigkeitsfilters 2,
$a_s(k)$ der k-te Ausgangssollwert des Beschleunigungsfilters 3,
$g_x(i)$ der i-te Gewichtsfolgekoeffizient des Positionsfilters 1,
$g_v(i)$ der i-te Gewichtsfolgekoeffizient des Geschwindigkeitsfilters 2,
$g_a(i)$ der i-te Gewichtsfolgekoeffizient des Beschleunigungsfilters 3,
w der veränderliche Vorgabewert und
n die zeitliche Breite der Filter 1, 2, 3, .. sind.

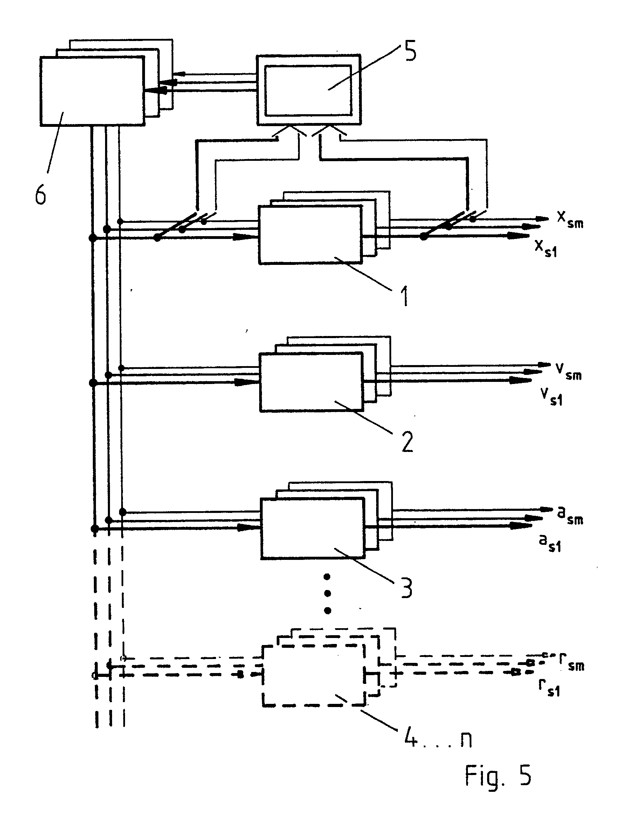

Um die Genauigkeit der Regelung weiter zu verbessern, ist erfindungsgemäß ein Weiterschalter 5 vorgesehen, der, wie aus dem Blockschaltbild in Fig. 5 hervorgeht, die veränderlichen Vorgabewerte w und die zugeordneten Sollwerte $x_s$ des Filters 1 als Eingang erhält, und der darüber entscheidet, welcher Vorgabewert w(k) aus der Vorgabewertfolge den Filtern 1, 2, 3, 4, ... zugeführt wird.

Ist die Abweichung e zwischen dem k-ten Vorgabewert w(k) und dem zugeordneten, generierten Sollwert $x_s(k)$ größer als eine zugelassene, frei wählbare Toleranz f, dann wird beim nächsten Schritt nochmals der k-te Vorgabewert w(k) den Filtern 1, 2, 3, 4, . . . zugeführt, d.h. der Vorgabewert w(k) wird festgehalten; es gilt:
w(k + 1) = w(k) für |w(k) - $x_s$(k)| = e > f;
andererseits steuert der Weiterschalter 5 den Vorgabewertspeicher 6 auf den nächsten Vorgabewert w-(k + 1), wenn die zu erwartende Abweichung e (Bahnfehler) kleiner als die zugelassene Toleranz f wird; es gilt
w(k + 1) = w(k) + ΔW für |w(k)-$x_s$(k)| = e < f
mit Δ W = w'(k + 1)-w(k) wobei w'(k + 1) der Vorgabewert des nächsten Schrittes ist.

Dadurch wird erreicht, daß der generierte Ausgangssollwert $x_s$ sich bis auf eine frei wählbare, kleine Differenz dem Vorgabewert w nähert.

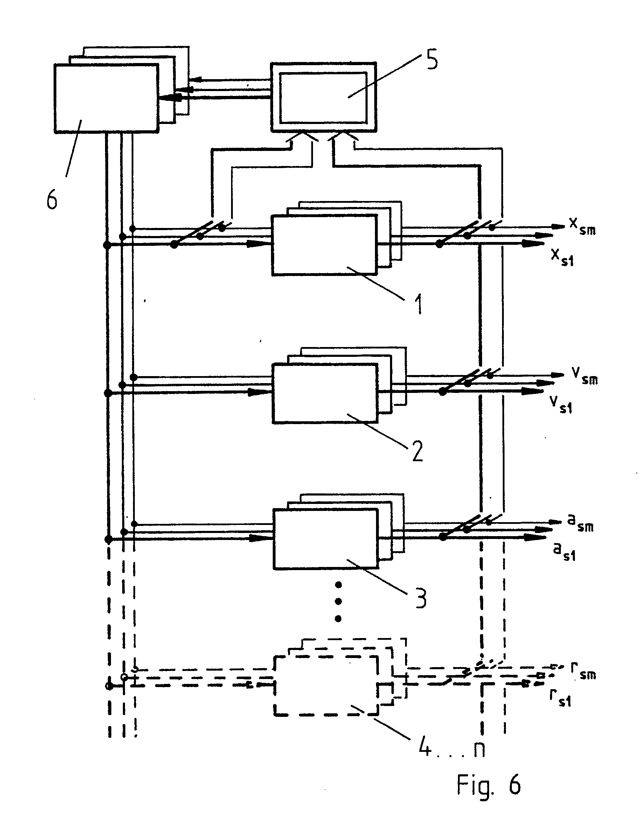

Entsprechende Einschränkungen bei der Generierung lassen sich erfindungsgemäß auch für die anderen Sollwertgrößen $v_s$, $a_s$, $r_s$, ... vorgeben, wobei zweckmäßigerweise die physikalische Sollwertgröße $v_s$, $a_s$, $r_s$, ... als Vergleichsgröße herangezogen wird, die für die vorgesehene Steuerung am besten geeignet ist. Ein entsprechendes Blockschaltbild, bei dem alle Sollwerte $x_s$, $v_s$, $a_s$, $r_s$ der Filter 1, 2, 3, 4, dem Weiterschalter 5 zugeführt und dort selektiert werden, ist in Fig. 6 dargestellt.

Das in Fig. 7 dargestellte Blockschaltbild zeigt ein Anwendungsbeispiel für die erfindungsgemäße Filteranordnung auf eine bekannte, aus mehrschleifigen Regelkreisen bestehende Steueranordnung zur Steuerung eines Antriebes 12.

Aus dem Vorgabewertspeicher 6 werden die zeitlich veränderlichen Vorgabewerte w zur Generierung den Filtern 1, 2, 3, 4, die im einzelnen ein Positionsfilter 1, ein Geschwindigkeitsfilter 2, ein Beschleunigungsfilter 3 und ein Ruckfilter 4 darstellen, sowie dem Weiterschalter 5 zugeführt. Außerdem liegt am Weiterschalter 5 als Vergleichsgröße der Sollwert $x_s$ des Positionsfilters 1.

Die Steueranordnung für den Antrieb 12 besteht aus Vergleichsgliedern 7, aus einem Positionsregler 8, einem Geschwindigkeitsregler 9, einem Beschleunigungsregler 10, einem Ruckregler 11 sowie einem Integrierglied 13, das zur Erzeugung der Istwertposition $x_i$ durch Integration der Istwertgeschwindigkeit $v_i$ dient.

Die generierten Sollwerte $x_s$, $v_s$, $a_s$ und $r_s$ aus der erfindungsgemäßen Filteranordnung sowie die Istwerte $x_i$, $v_i$, $a_i$ und $r_i$ des Antriebes 12 erhalten die entsprechenden Vergleichsglieder 7, die aus diesen Werten und dem Ausgangssignal des vorangehenden Reglers jeweils die Eingangssignale des nachfolgenden Reglers erzeugen. Von dem Ruckregler 11 gelangt das Regelsignal zu dem Stellglied des Antriebs 12. Die erläuterte Filter- und Regelanordnung ermöglicht eine hohe Bahngenauigkeit bei gleichzeitig hoher Laufruhe.

Im folgenden Beispiel wird noch eine mögliche Auslegung der Filter 1, 2, 3, 4 beschrieben unter Vorgabe
- einer überschwingfreien Beschleunigungs- bzw. Verzögerungszeit von T = 50 ms
- eine Abtastzeit für die Filter von $\Delta T$ = 1 ms
- eines Rucks als höchste stetige und differenzierbare zeitliche Ableitung der Form

$$r(\tilde{\tau}) = \begin{cases} \sin \tilde{\tau} & 0 \leq \tilde{\tau} < \dfrac{3\tilde{\pi}}{2} \\ -1 & \text{für} \quad \dfrac{3\tilde{\pi}}{2} \leq \tilde{\tau} < \dfrac{3\tilde{\pi}}{2} + 2 \\ \sin(\tilde{\tau}-2) & \dfrac{3\tilde{\pi}}{2} + 2 \leq \tilde{\tau} < 3\tilde{\pi} + 2 \end{cases}$$

mit der Normierung:

$$\tilde{\tau} = t \cdot \frac{3\tilde{\pi} + 2}{T} \; ;$$

t = i·$\Delta T$, i = 0, 1, 2,..., n und des Gewichtsfolgekoeffizienten für den Ruck
$\vartheta_r(i) = r((i+1) \cdot \Delta\tau) - r(i \cdot \Delta\tau); \Delta\tau = \frac{\Delta t}{T}(3\pi + 2)$
- und eines Positionssprungs.

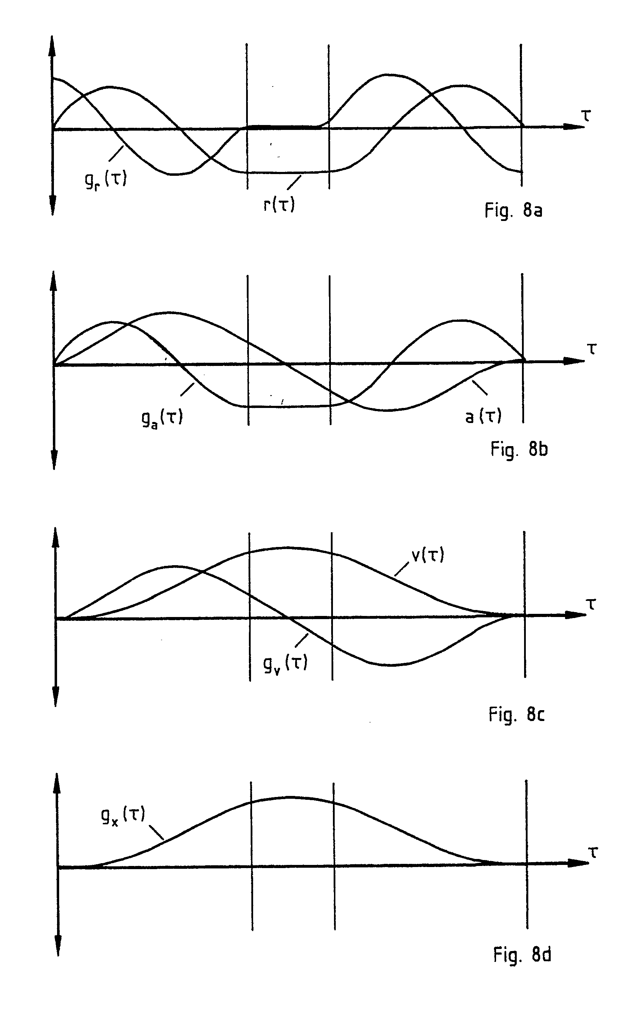

Die Signalverläufe des so vorgegebenen Rucks $r(\tau)$ und des Gewichtsfolgekoeffizienten $g_r(i)$ ist in Fig. 8a dargestellt. Die Signalverläufe von Beschleunigung a( ), Geschwindigkeit $v(\tau)$ und Position $x(\tau)$ sowie ihrer zugehörigen Gewichtsfolgekoeffizienten $g_a(i)$ , $g_v(i)$ und $g_x(i)$ erhält man, wie nachfolgend erläutert, durch mehrfache sukzessive Integration des Rucks oder durch Summation der Gewichtsfolgekoeffizienten. Die entsprechenden Signalverläufe sind in den Fig. 8b - 8d dargestellt (außer $x(\tau)$).

Die Gewichtsfolge der Beschleunigung erhält man entweder durch Integration des Rucks mit

$$a(\tilde{\tau}) = \int_{\phi=0}^{\tilde{\tau}} r(\phi) \cdot d\phi \qquad\qquad \text{als}$$

$$g_a(i) = a\big((i+1)\cdot\Delta\tilde{\tau}\big) - a(i\cdot\Delta\tilde{\tau}) \qquad \text{oder}$$

numerisch duch Summation der Gewichtsfolgekoeffizienten des Rucks gemäß

$$g_a(i) = \sum_{\ell=0}^{i} g_r(\ell) \; ,$$

i = 0, 1, 2,..., n

Der Verlauf der Beschleunigung $a(\tau)$ und der zugehörigen Gewichtsfolge $g_a(\tau)$ ist in Fig. 8b dargestellt. Die Gewichtsfolge der Geschwindigkeit erhält man entweder durch Integration der Beschleunigung mit

$$v(\tilde{\tau}) = \int_{\phi=0}^{\tilde{\tau}} a(\phi) \cdot d\phi \qquad\qquad \text{als}$$

$$g_r(i) = v\big((i+1)\cdot\Delta\tilde{\tau}\big) - v(i\cdot\Delta\tilde{\tau}) \qquad \text{oder}$$

numerisch durch Summation der Gewichtsfolgekoeffizienten der Beschleunigung gemäß

$$g_v(i) = \sum_{\ell=0}^{i} g_a(\ell) \; ,$$

i = 0, 1, 2,..., n

Der Verlauf der Geschwindigkeit $v(\tau)$ und der zugehörigen Gewichtsfolge $g_v(\tau)$ ist in Fig. 8c dargestellt. Die Gewichtsfolge der Position erhält man entweder durch Integration der Geschwindigkeit gemäß

$$x(\tilde{\tau}) = \int_{\phi=0}^{\tilde{\tau}} v(\phi) \cdot d\phi \qquad\qquad \text{als}$$

$$g_x(i) = x\big((i+1)\cdot\Delta\tilde{\tau}\big) - x(i\cdot\Delta\tilde{\tau}) \qquad \text{oder}$$

numerisch durch Summation der Gewichtsfolgekoeffizienten der Geschwindigkeit gemäß

$$g_x(i) = \sum_{\ell=0}^{i} g_v(\ell) \, ,$$

$i = 0, 1, 2, ..., n$

Die Gewichtsfolge der Positionen $g_x(\tau)$ ist in Fig. 8d dargestellt.

Die beschriebenen Beispiele stellen Ausführungsbeispiele der Filteranordnung nach der Erfindung dar. Es sind auch andere Ausbildungen möglich.

## Ansprüche

1. Filteranordnung zur Generierung von Vorgabewerten zeitlich veränderlicher, physikalischer Größen mit stetigen, zeitlichen Ableitungen beliebiger Ordnung für Regel- und Steueranordnungen, dadurch gekennzeichnet, daß Filter (1, 2) vorgesehen sind, deren Charakteristik so beschaffen ist, daß zeitlich veränderliche Vorgabewerte (w) aus einem Vorgabewertspeicher (6) zu Sollwertsignalen für Regel-und Steueranordnungen aufbereitet werden, die auf die technisch-physikalischen Anforderungen der anzusteuernden Aggregate zugeschnitten sind, wobei das eine Filter (2) als Ausgang Sollwerte ($v_s$) liefert, die die zeitliche Ableitung erster Ordnung der generierten Sollwerte ($x_s$) des ersten Filters (1) darstellen.

2. Filteranordnung nach Anspruch 1, dadurch gekennzeichnet, daß ein weiteres Filter (3) vorgesehen ist, das als Ausgang zeitliche Ableitungen zweiter Ordnung ($a_s$) der Sollwerte ($x_s$) des ersten Filters (1) liefert.

3. Filteranordnung nach Anspruch 2, dadurch gekennzeichnet, daß ein anderes Filter (4) vorgesehen ist, das als Ausgang zeitliche Ableitungen dritter Ordnung ($r_s$) der Sollwerte ($x_s$) des ersten Filters (1) liefert.

4. Filteranordnung nach Anspruch 1, dadurch gekennzeichnet, daß neben dem einen Filter (1) weitere Filter (2, 3, 4, ...) vorgesehen sind, die sukzessiv steigend zeitliche Ableitungen beliebiger Ordnung ($v_s$, $a_s$, $r_s$, ...) der Sollwerte ($x_s$) des ersten Filters (1) liefern.

5. Filteranordnung nach Anspruch 1, dadurch **gekennzeichnet**, daß ein Weiterschalter (5) vorgesehen ist, der die zeitlich veränderlichen Vorgabewerte (w) und die zugeordneten, generierten Sollwerte ($x_s$) eines Filters (1) als Eingangswerte erhält, und der den Vorgabewertspeicher (6) so steuert, daß aus der Folge der Vorgabewerte (w) der diskrete Vorgabewert (w (k) ) zeitlich so lange den Filtern (1, 2) zugeführt wird, bis die Abweichung (e) zwischen Vorgabewert (w (k) ) und generiertem Sollwert ($x_s$) unterhalb einer zugelassenen Toleranz (f) liegt.

6. Filteranordnung nach Anspruch 5, dadurch **gekennzeichnet**, daß der Weiterschalter (5) neben den zeitlich veränderlichen Vorgabewerten (w) und den zugeordneten generierten Sollwerten ($x_s$) des ersten Filters (1) noch die generierten Sollwerte ($v_s$, $a_s$, $r_s$, ...) der anderen Filter (2, 3, 4, ...) als Eingangswerte erhält, und der den Vorgabewertspeicher (6) so steuert, daß aus der Folge der Vorgabewerte (w) der diskrete Vorgabewert (w (k) ) zeitlich so lange den Filtern (1, 2, 3, 4, ...) zugeführt wird, bis die Abweichung zwischen dem für die Steuerung der Aggregate am besten geeigneten Sollwert und dem generierten Sollwert ($x_s$ oder $v_s$ oder $a_s$ oder $r_s$ ...) unterhalb einer zugelassenen Toleranz liegt.

W

Fig. 1a

$\dot{W}$

Fig. 1b

$\ddot{W}$

Fig. 1c

W

Fig.2a

$\dot{W}$

Fig.2b

$\ddot{W}$

Fig.2c

Fig. 3

Fig. 4

Fig. 5

Fig. 6

Fig. 7

$g_r(\tau)$

$r(\tau)$

Fig. 8a

$g_a(\tau)$

$a(\tau)$

Fig. 8b

$v(\tau)$

$g_v(\tau)$

Fig. 8c

$g_x(\tau)$

Fig. 8d